# EUROPEAN PATENT APPLICATION

(11) **EP 2 014 929 A1**
(43) Date of publication of application: **14.01.2009**
(21) Application number: 07425422.8
(22) Date of filing: 09.07.2007
(51) Int. Cl.: F16B 12/42, A47B 47/02

(54) **Device for interconnecting components of modular furniture**

(71) Applicant: Arthema Group S.r.l., 20040 Aicurzio ( Milano) (IT)
(72) Inventor: Belardinelli, Roberto, 47900 Rimini (IT)
(74) Representative: Leihkauf, Steffen Falk

(57) **Abstract**

A device (1) for interconnecting a first component (2) and a second component (3) of a modular piece of furniture comprises a first (4) and a second (5) cover elements which are suitable to at least partially cover the first component (2) of the modular piece of furniture, means (6) for connecting the device (1) to the first component (2) and means (8) for the relative connection of the first (4) and the second (5) cover elements of the device (1). The first (4) and the second (5) cover elements of the device (1) comprise toothed means (9) suitable to be fitted within each other in a fitting direction (I) such as to provide the relative connection between the first (4) and second (5) cover elements in a relative coupling position.

## Description

The present invention relates to a device for interconnecting components of modular furniture, particularly for interconnecting components that are suitable to form the frame of a modular shelf.

Modular shelves comprise a plurality of usually tubular uprights, which support components that are transversal thereto, such as cross-beams or support racks. The uprights and transversal components forming shelf frames are normally of a standard type and are provided in a limited and predefined number of shapes and sizes. They are interconnected to each other by means of suitable interconnecting devices.

After they have been assembled, these modular shelves must be capable of supporting high loads. It is thus important that the interconnecting device which interconnects each pair of uprights and transversal components affords high connection strength.

An example of an interconnecting device is disclosed in JP 2004-142903. This document describes an interconnecting device comprising two C-shaped supports, which are suitable to partially envelop a tubular upright on two opposite sides thereof. Each one of the two C-shaped supports can be connected to the upright by means of removable bolts which pass through the C-shaped supports and through the upright by means of holes that are suitably provided in these components. In addition, in order to ensure high load strength to the device, both C-supports are mutually connected by means of two opposite plates that are provided with holes through which said bolts are passed, which have thus a double function of connecting the C-shaped supports to the upright, and the C-shaped supports to each other.

This known interconnecting device has, however, the drawback of requiring a number of auxiliary components for connecting the C-shaped supports to the upright as well as to mutually connecting both C-shaped supports, particularly plates and bolts. Due to the presence of these auxiliary components, the device is complicated to assemble, and also time-consuming due to the long time required for assembly.

The object of the present invention is thus to provide a device for interconnecting components of modular furniture which requires a few assembly operations and can be thus assembled quite easily and in a short time.

These and other objects are achieved by means of an interconnecting device according to claim 1, and a modular shelf according to claim 27. Each dependent claim defines a possible embodiment of the interconnecting device or modular shelf.

In order to better understand the invention and appreciate the advantages thereof, some exemplary and non-limiting embodiments of the same will be described herein below, with reference to the annexed drawings, in which:

Fig. 1 is a perspective view of an interconnecting device according to the invention in a particular condition of use;

Fig. 2 is a exploded partially phantom perspective view of the interconnecting device in Fig. 1;

Fig. 3 is a side view of the interconnecting device in Fig. 1;

Fig. 4 is a sectional view of the interconnecting device in Fig. 3 taken along the line A-A;

Fig. 5 is a perspective view of an interconnecting device according to a further embodiment of the invention in a particular condition of use;

Fig. 6 is an exploded partially phantom perspective view of the interconnecting device in Fig. 5;

Fig. 7 is a side view of the interconnecting device in Fig. 6;

Fig. 8 is a sectional view of the interconnecting device in Fig. 7 taken along the line B-B.

With reference to the figures, a device for interconnecting a first component 2 and a second component 3, particularly a second component transversal to the first one, of a modular piece of furniture is designated with numeral 1. The modular piece of furniture can be a modular shelf which comprises one or more of the first components 2 and second components 3, for example one or more uprights and one or more general transversal elements to be connected to the uprights, such as cross-beams or racks. In accordance with an embodiment, the uprights comprise tubular bodies, such as of circular, square, or rectangular section. Preferably, the first components 2 of the modular piece of furniture, particularly the uprights, extend along a direction of development of the first component M.

The device 1 comprises a first cover element 4 and a second cover element 5 which are suitable to at least partially cover the first component 2 of the modular piece of furniture.

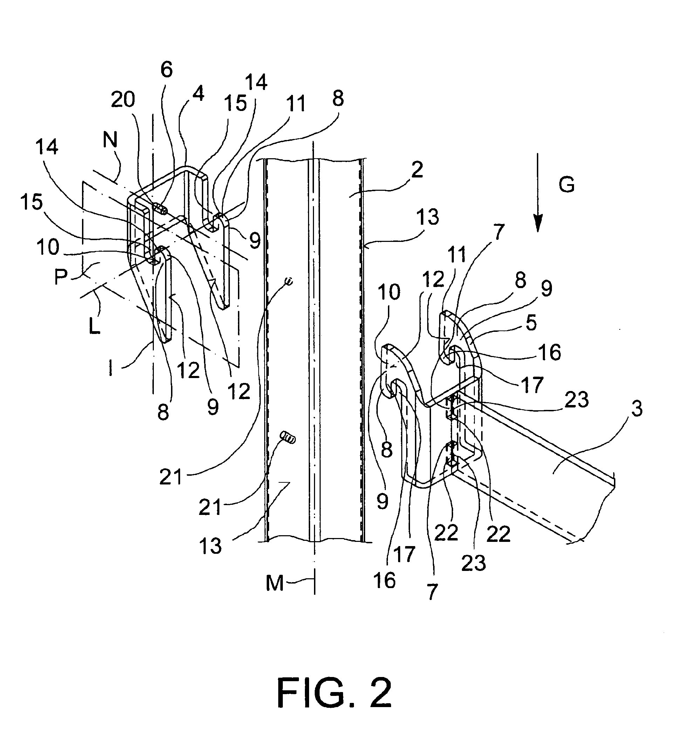

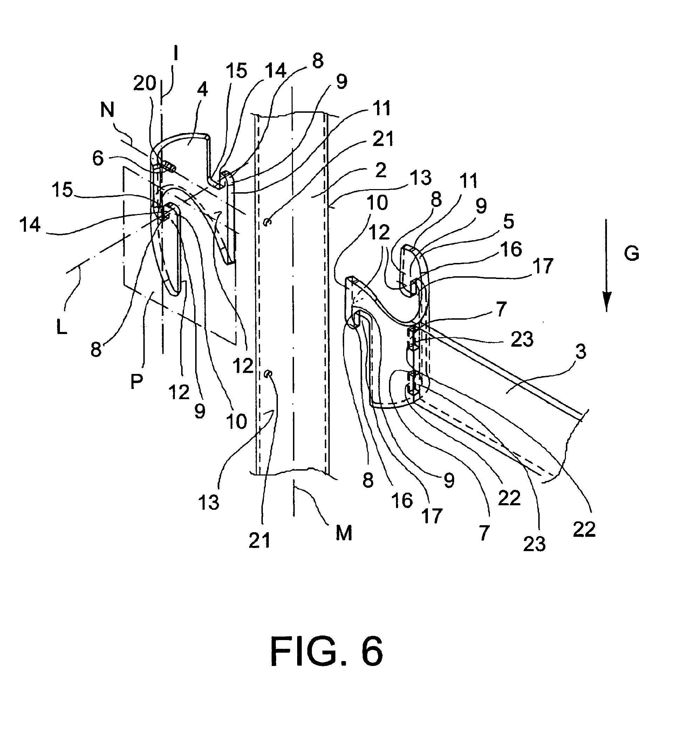

The device 1 further comprises means 6 for connecting the device 1 to the first component 2 and means 8 for the relative connection of the first cover element 4 and second cover element 5 (Fig. 2 and 6). The device 1 can further comprise means 7 for connecting the device 1 to the second component 3.

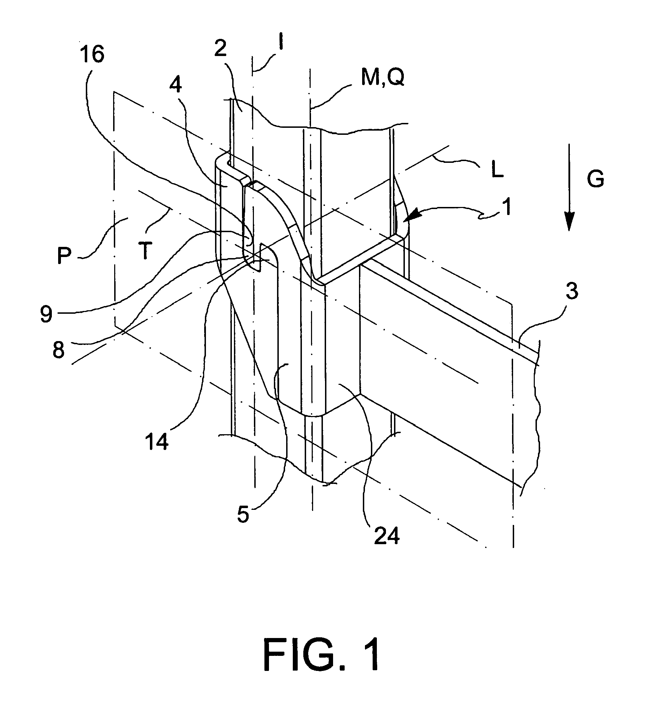

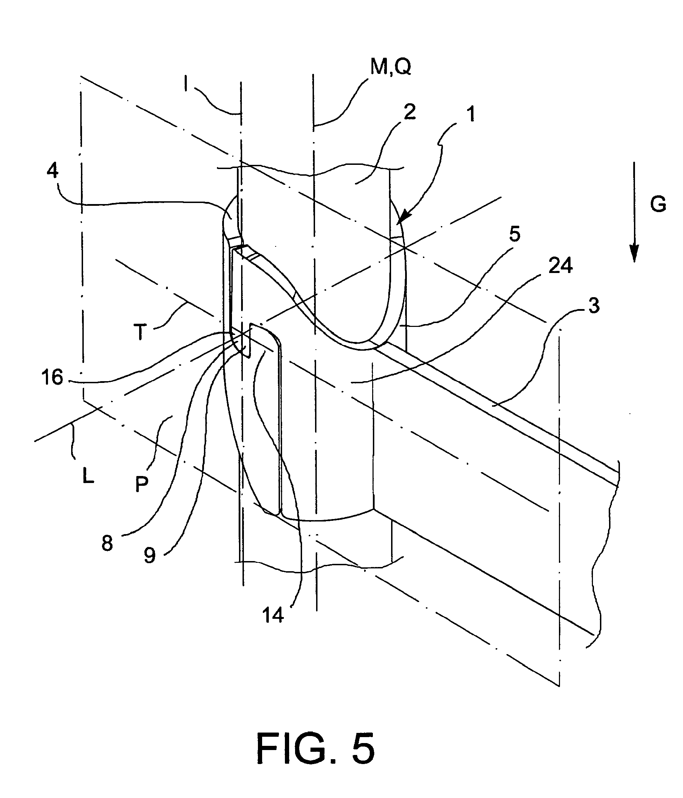

Advantageously, the first cover element 4 and the second cover element 5 comprise toothed means 9 that are suitable to be fitted within each other in a fitting direction I such as to provide the connection between the first cover element 4 and the second cover element 5 of the device 1 in a relative coupling position (in relation to the latter aspect, see for example Fig. 1 and 5). In accordance with a possible embodiment, the toothed means 9 define said means 8 for connecting the first 4 and second 5 cover element.

Due to the presence of the toothed means 9, the cover elements 4 and 5 can be connected to each other, thereby providing high strength to the device 1 in order to withstand the loads to which the modular piece of furniture can be subjected under usage conditions. Furthermore, the toothed means 9 afford an easy mutual connection between the first 4 and second 5 cover elements. In fact, as this connection is provided by means of mechanical fitting of the toothed means 9, it can be manually carried out, without using auxiliary components, such as plates or bolts, or work tools, such as screw drivers or wrenches. Consequently, the operations for assembling the device 1 result to be simple and thus little time-consuming.

Advantageously, the toothed means 9 are shaped such as to allow the relative sliding between the first cover element 4 and second cover element 5 in the fitting direction I until they reach the relative coupling position thereof, in which the toothed means 9 have completed their mutual fitting. Thereby, the coupling of the first cover element 4 to the second cover element 5 can be provided simply by manually sliding the latter in this sliding direction I. When the fitting of the toothed means 9 has been completed, this relative sliding is no longer possible, since each cover element abuts against the other and the user is thus informed that the proper relative coupling position has been reached between the cover elements 4 and 5. Preferably, the toothed means 9 are shaped such that the fitting direction I is substantially parallel to or coincident with the development direction M of the first component 2.

With further advantage, the toothed means 9 are shaped such that they substantially prevent relative movements from occurring between the first cover element 4 and the second cover element 5 in at least one locking direction T that is transversal to, particularly orthogonal to the fitting direction I after they have reached the relative coupling position thereof. Thanks to this advantageous configuration, it is avoided that, when the device 1 is being assembled to the first component 2, mutual separation movements occur between the cover elements 4 and 5, and hence between the latter and the first component 2, particularly transversal movements away from the direction of development M of the first component 2, which, as stated above, is preferably substantially parallel to or coincident with the fitting direction I and thus preferably orthogonal to the locking direction T.

In accordance with an embodiment, the toothed means 9 are shaped such as to substantially allow relative movements between the first cover element 4 and second cover element 5 along at least one side sliding direction L which is transversal to, preferably perpendicular to a plane P on which the fitting direction I and locking direction T lay. However, these toothed means 9 are configured such that these relative movements of the cover elements 4 and 5 along the side sliding direction L are prevented by the first component 2 of the modular piece of furniture when the device 1 is assembled to the latter. In other words, the toothed means 9 are not suitable, per se, to avoid the side sliding of the cover elements 4 and 5 along the side sliding direction L when the latter are in their relative coupling position and the device 1 is not connected to the first component 2. On the other hand, when this connection of the device 1 to the first component 2 has been carried out, it is the latter which prevents this relative movement from occurring between the first 4 and second 5 cover elements in the side sliding direction L.

To the purpose, the toothed means 9 are advantageously provided at side ends 10 and 11 of each one of the cover elements 4 and 5. These side ends 10 and 11 are opposite to each other according to the side sliding direction L (Fig. 2, 4; 6, 8). According to a possible embodiment, each of the toothed means 9 at the side ends 10 and 11 of the cover elements 4 and 5 comprises an abutment surface 12 that is suitable to abut against corresponding surfaces or portions of outer surfaces 13 of the first component 2, which are also opposite to each other according to the side sliding direction L. The abutment between the abutment surfaces 12 and the surfaces or portions of outer surfaces 13 provides end-of-travel stops at the opposite side ends 10 and 11 of the cover elements 4 and 5, which, under assembly conditions are thus not free to move in the side sliding direction L.

Advantageously, the first cover element 4 and the second cover element 5 of the device 1 form the toothed means 9. Particularly, the toothed means 9 are arranged at the side ends 10 and 11 of each of the cover elements 4 and 5 and are formed as one piece with them. Thereby, the operations required for assembling the device 1 are further reduced, since the toothed means 9 are not required to be connected to the cover elements 4 and 5.

In accordance with a possible embodiment, the toothed means 9 of the first cover element 4 comprise, preferably on each side end 10 and 11, a first tooth 14 and a first tooth seat 15, and the toothed means 9 of the second cover element 5 comprise, preferably on each side end 10 and 11, a second tooth 16 and a second tooth seat 17. The first teeth 14 of the first cover element 4 are suitable to be fitted within the second tooth seats 17 of the second cover element 5 and the second teeth 16 of the second cover element 5 are suitable to be fitted within the first tooth seats 15 of the first cover element 4. These fitting operations of the first teeth 14 and second teeth 16 within the second tooth seats 17 and first tooth seats 15, respectively, are advantageously carried out in the fitting direction I.

To the purpose, the first teeth 14 of the first cover element 4 and the second teeth 16 of the second cover element 5 are preferably parallelepiped-shaped, and still more preferably, the second tooth seat 16 of the second cover element 5 and the first tooth seat 14 of the first cover element 4 are substantially complementary to them, respectively. This shape of the teeth 14 and 16 and tooth seats 15 and 17 determines the fitting direction I.

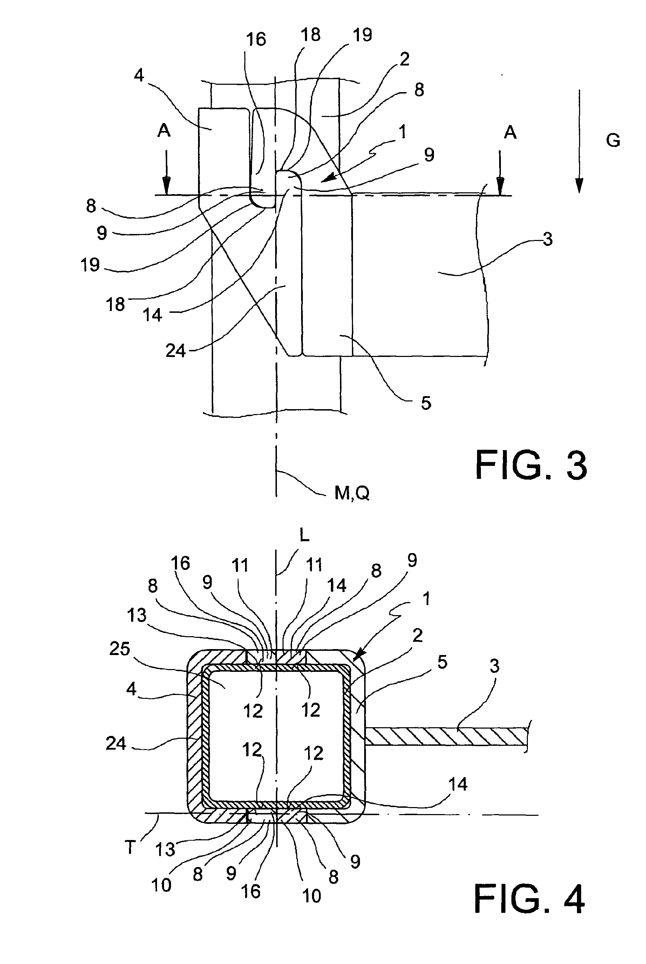

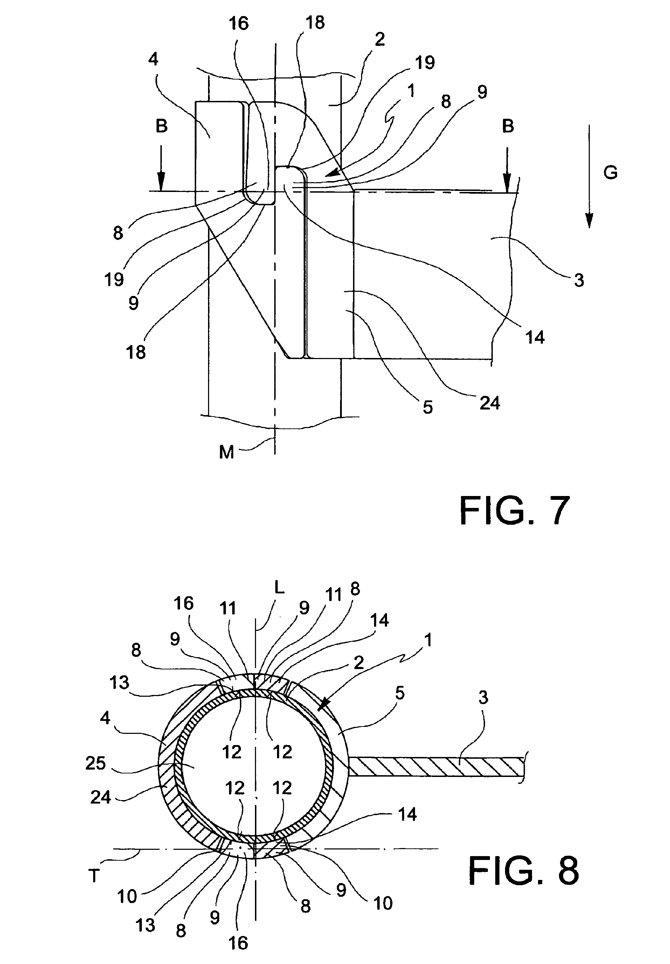

In accordance with an embodiment, the toothed means 9 of the first 4 and second 5 cover elements are shaped such that, following their mutual fitting, i.e. in the relative coupling position of the first and second cover element, between the first teeth 14 of the first cover element 4 and the second tooth seats 17 of the second cover element 5 and/or between the second teeth 16 of the second cover element 5 and the first tooth seats 15 of the first cover element 4 there is provided a small clearance (to the purpose, see for example Fig. 3 and 7). Thereby, between the first cover element 4 and second cover element 5, when the latter are in their relative coupling position, slight relative movements and/or slight relative rotations are allowed. This characteristic facilitates the assembly operations on the device 1 without impairing the load strength of the latter. Under device-loaded conditions, in fact, the possibility of relative rotations between the teeth and tooth seats can cause the teeth to be slightly inclined within the tooth seats, thereby providing levers that are suitable to reinforce the connection between the first cover element 4 and the second cover element 5.

In order to further facilitate these slight relative rotations between the first cover element 4 and second cover element 5, the first teeth 14 of the first cover element 4 and the second teeth 16 of the second cover element 5, as well as the first tooth seats 15 of the first cover element 4 and the second tooth seats 17 of the second cover element 5 can comprise rounded portions 18 and 19, respectively.

In accordance with an embodiment, the means 6 for connecting the device 1 to the first component 2 of the modular piece of furniture are formed by at least one of the first cover element 4 and second cover element 5, preferably by only one of them, still more preferably by the first cover element 4 (Fig. 2 and 6).

Advantageously, these means 6 for connecting the device 1 to the first component 2 comprise a pin 20 that is preferably associated with the first cover element 4, which is suitable to be inserted within a corresponding pin seat 21, which is preferably associated with the first component 2, for example a peripheral through hole that is provided in the upright of the modular shelf. This pin 20 can be inserted within the pin seat 21 for example by means of pressure, interference or snap actions.

The pin 20, which is preferably made as one piece with the first cover element 4, develops in a pin development direction N which is advantageously substantially parallel to the plane P and, further advantageously, substantially orthogonal to the fitting direction I. Thereby, the first cover element 4 can be connected to the first component 2 of the modular piece of furniture by inserting the pin 20 within the pin seat 21 of the first component 2 in the pin development direction N, whereas the second cover element 5 can be connected to the first cover element 4 by means of sliding in the fitting direction I. Advantageously, the second cover element 5 results to be locked to the first component 2 by means of the first cover element 4.

The pin seats 21, particularly the through holes, are preferably spaced in the development direction M of the first component, particularly the upright.

In accordance with an embodiment, the means 7 for connecting the device 1 to the second component 3 of the modular piece of furniture comprise one or more connecting seats 22 that are suitable to accommodate corresponding connecting portions 23 of the second component 3, for example projecting portions that are suitable to be press locked within the connecting seats 22. These connecting seats 22 can be further suitable to provide a shape coupling with these projecting portions. These connecting seats 22, preferably in a number of two, can be formed by both cover elements 4 and 5 of the device 1 or by only one of them, preferably by the second cover element 5.

Advantageously, the first cover element 4 and second cover element 5 are configured such that, in their relative coupling position, they form a tubular body 24 that defines a through opening 25 therein. This through opening 25 develops in an opening development direction Q and is suitable to at least partially accommodate the first component 2 of the modular piece of furniture (see, for example, Fig. 1, 4 and 5, 8). The through opening 25 is preferably substantially complementary to the outer profile of the first component 4 and, still more preferably, is shaped such that, when the device 1 is being assembled to the first component 2, the development direction M of the first component 2 and the opening development direction Q of the through opening 25 are substantially coincident to each other. Thereby, the connection of the second cover element 5 to the first cover element 4, when the latter is already connected to the first component 2, can be carried out by sliding the second cover element 5 on the outer surface of the first component 2, in the development direction thereof, until the second cover element 5 has reached the relative locking position relative to the first cover element 4.

The interconnecting device 1 can adopt various configurations, such as to be couplable with variously shaped first and second components, particularly tubular uprights of different types.

In accordance with an embodiment, the tubular body 24 formed by the first and second cover elements, as well as the through opening 25 have in the cross section thereof, i.e. in a section taken on a plane orthogonal to the opening development direction Q, a substantially squared or rectangular shape, such that the device can be coupled with first components, particularly uprights, which also have a squared or rectangular cross section (Fig. 1 to 4).

In accordance with a further embodiment, the tubular body 24 and the through opening 25 have, in the cross section thereof, a substantially circular shape, such that the device 1 can be coupled with uprights that also have a circular cross section (Fig. 5 to 8).

With reference to the preferred embodiments illustrated in the attached drawings, the modes will be described below for connecting and disconnecting the interconnecting device 1 according to the invention to a first component 2, for example an upright, and a second component 3, for example a cross-beam transversal to the upright, of a modular piece of furniture, for example a modular shelf.

With reference to an initial unassembled condition, the mounting of the device 1 can be carried out by first connecting the first cover element 4 to the upright 2 by inserting the pin 20 within the pin seat 21 of the upright along the pin development direction N. The coupling between the pin 20 and the pin seat 21, as well as the shape-coupling between the portion of the through opening 25 defined by the first cover element 4 and the outer surface of the upright 2 ensure that the first cover element 4 is rotatably and translatably locked relative to the upright 2.

The second cover element 5 can be connected to the upright 2 by means of the first cover element 4. Particularly, the connection of the second cover element 5 to the first cover element 4 can be carried out by sliding the second cover element 5 on the side wall of the upright 2, in the development direction of the latter M (which, advantageously, coincides with the fitting direction I of the toothed means). Thereby, the second teeth 16 of the second cover element 5 are fitted within the first tooth seats 14 of the first cover element 4 and the first teeth 14 of the first cover element 4 are fitted within the second tooth seats 17 of the second cover element 5, by sliding in the fitting direction I. This sliding is stopped when the first cover element 4 and the second cover element 5 have reached their relative coupling position.

The connection of the cross-beam 3 to the device 1, particularly to the second cover element 5, can be carried out either before or after the mutual connection between the first cover element 4 and the second cover element 5. This connection can be carried out by inserting the connecting portions 23 of the cross-beam 3 within the corresponding connecting seats 22 of the second cover element 5.

It should be noted that, preferably, the toothed means 3 are configured such that, under the normal usage conditions of the assembled piece of furniture, in the relative coupling position, the first cover element 4 counteracts the force of gravity G acting on the second cover element 5, thus preventing the latter from falling. Consequently, in these conditions, the first teeth 14 of the first cover element 4 preferably face upwards and the second teeth 16 of the second cover element 5 face downwards ("face upwards" and "face downwards" are referred to those situations that are illustrated for example in Fig. 1 and 5, in which the direction of the force of gravity G has been indicated in order to identify the orientation of the modular piece of furniture in those conditions of use that have been considered as a reference). In the assembly operation described above, the sliding direction of the second cover element 5 relative to the first cover element 4 for the mutual fitting of the toothed means in the fitting direction I is coincident to the direction of the force of gravity G, i.e. it proceeds downwards.

The disassembly operations on the device 1 can follow a substantially reverse series of operations of that required by the mounting operations.

The second cover element 5 can be disconnected from the first cover element 4 by means of a sliding of the same in the fitting direction I, according to a direction, which is, this time, opposite to the direction of the force of gravity G, i.e. upwards. After the fitting has been removed from the toothed means 9 of the first cover element 4 and the second cover element 5, the second cover element 5 is free to be moved away in any direction from the upright 2. The cross beam 3 can be disconnected from the second cover element 5 either before or after the latter has been separated from the first cover element 4, by means of disconnection of the connecting portions 23 of the cross-beam 3 from the connecting seats 22 of the second cover element 5.

The first cover element 4 can also be then removed from the upright 2 by being moved away from the upright in the pin development direction N until this pin 20 is completely disengaged from the pin seat 21.

As will be understood by those skilled in the art, all the operations described above, both assembly and disassembly of the device 1, can be manually carried out without using any work tool, such as a screw driver, a wrench, or the like.

According to a further aspect of the invention, a device 1 is provided for interconnecting a first component 2 and a second component 3 of a modular piece of furniture, wherein this device comprises:
- a first 4 and a second 5 cover elements that are suitable to at least partially cover the first component 2 of the modular piece of furniture;
- means 6 for connecting the first cover element 4 to the first component 2;
- means 8 for the relative connection of the first 4 and second 5 cover elements of the device 1,
wherein the second cover element 5 is connected to the first component 2 only by means of the first cover element 4. This device can have one or more of the further characteristics described above with reference to the above embodiments.

From the description provided above, those skilled in the art will appreciate how the interconnecting device according to the invention resolves at least some of the drawbacks of the interconnecting devices cited with reference to the prior art.

Particularly, those skilled in the art will appreciate how the provision of the toothed means for coupling the first and second cover elements results in a solid connection between the latter which is also simple to carry out.

Those skilled in the art will also appreciate how the number of total operations required to be carried out to assemble the device according to the invention is small, which considerably reduces the number of operations required and hence the total time required to carry out the latter.

Finally, those skilled in the art will appreciate how the assembly of the device according to the invention does not require using particular work tools, and hence how it can be carried out by hand in an easy manner.

It is understood that variations and/or additions may be provided to what has been described and illustrated above.

According to a possible variant embodiment, the second cover element 5 of the device 1 and the second component 3 of the modular piece of furniture can be made as one piece.

According to a further possible variant embodiment, the pin 20 can be associated with the first component 2 of the modular piece of furniture and the pin seat 21 to the device 1, particularly to the first cover element 4.

Of course, those skilled in the art, aiming at satisfying contingent and specific requirements, may carry out a number of modifications, adaptations or replacements of elements with functionally equivalent ones to the embodiments described herein of the interconnecting device for modular furniture according to the invention, without however departing from the scope of the claims below.

## Claims

1. A device (1) for interconnecting a first component (2) and a second component (3) of a modular piece of furniture, said device (1) comprising:
- a first (4) and a second (5) cover elements suitable to at least partially cover said first component (2) of the modular piece of furniture;
- means (6) for connecting the device (1) to said first component (2);
- means (8) for the relative connection of said first (4) and said second (5) cover elements of the device (1),
**characterized in that** said first (4) and said second (5) cover elements of the device (1) comprise toothed means (9) which are suitable to be fitted within each other in a fitting direction (I) such as to provide said relative connection between the first (4) and second (5) cover elements in a relative coupling position.

2. The device (1) according to the preceding claim, wherein said toothed means (9) are shaped such as to allow the relative sliding between said first cover element (4) and said second cover element (5) in said fitting direction (I) up to said relative coupling position thereof and to substantially prevent the relative movements thereof in at least one locking direction (T) that is transversal to said fitting direction (I) in said relative coupling position.

3. The device (1) according to the preceding claim, wherein said toothed means (9) are shaped such as to allow relative movements of said first cover element (4) and said second cover element (5) in one or more side sliding directions (L), that are transversal to a plane (P) on which said fitting direction (I) and said locking direction (T) lay, said relative movements in said side sliding directions (L) being prevented by said first component (2) of the modular piece of furniture when the device (1) is being assembled to the latter.

4. The device (1) according to the preceding claim, wherein said toothed means (9) are arranged on two side ends (10, 11), that are opposite according to said side sliding direction (L), of said first (4) and said second (5) cover elements of the device (1).

5. The device (1) according to any preceding claim, wherein said toothed means (9) are shaped such that said fitting direction (I) is substantially parallel to or coincident with one development direction (M) in which said first component is developed (2).

6. The device (1) according to any preceding claim, wherein said first (4) and said second (5) cover elements of the device (1) form said toothed means (9).

7. The device (1) according to any preceding claim, wherein the toothed means (9) of said first cover element (4) comprise a first tooth (14) and a first tooth seat (15) and the toothed means (9) of said second cover element (5) comprise a second tooth (16) and a second tooth seat (17), said first tooth (14) being suitable to be fitted within said second tooth seat (17) and said second tooth (16) being suitable to be fitted within said first tooth seat (15).

8. The device (1) according to the preceding claim, wherein said first (14) and said second (16) teeth are substantially parallelepiped-shaped and said first (15) and said second (17) tooth seats are substantially complementary to said second (16) and said first (14) teeth, respectively.

9. The device (1) according to claim 7 or 8, wherein in the relative coupling position of said first (4) and second (5) cover elements, a small clearance is provided between the first teeth (14) and second tooth seats (17) and/or between the second teeth (16) and the first tooth seats (15).

10. The device (1) according to any claim 7 to 9, wherein said first teeth (14) and second teeth (16) and said first tooth seats (15) and second tooth seats (17) comprise rounded portions (18, 19) that are suitable to allow limited relative rotations between said first cover element (4) and said second cover element (5) in the relative coupling position thereof.

11. The device (1) according to any preceding claim, wherein at least one of said first (4) and said second (5) cover elements of the device (1) forms said means (6) for connecting the device (1) to the first component (2) of the modular piece of furniture.

12. The device (1) according to any preceding claim, wherein said means (6) for connecting the device (1) to the first component (2) comprise a pin (20) that is suitable to be inserted within a corresponding pin seat (21).

13. The device (1) according to the preceding claim, wherein said pin (20) is associated with said first cover element (4) of the device (1) and said pin seat (21) is associated with said first component (2) of the modular piece of furniture.

14. The device (1) according to claim 12 or 13, wherein said pin (20) is made as one piece with said first cover element (4) of the device (1).

15. The device (1) according to any claim 12 to 14, wherein said pin (20) is developed in a development direction (N) of the pin (20) which is substantially orthogonal to said fitting direction (I).

16. The device (1) according to any claim 12 to 15, wherein said pin (20) can be inserted by means of pressure, interference, or snap actions within said pin seat (21).

17. The device (1) according to any preceding claim, wherein the connection of said second cover element (5) to said first cover element (4) following the connection of the latter to the first component (2) is carried out by sliding the second cover element (5) along the first component (2) until it reaches said relative locking position between said second cover element (5) and said first cover element (4).

18. The device (1) according to any preceding claim, wherein in the normal conditions of use of the assembled piece of furniture, in the relative coupling position, said first cover element (4) counteracts the force of gravity (G) acting on said second cover element (5).

19. The device (1) according to the preceding claim, wherein said first teeth (14) of the first cover element (4) face upwards and said second teeth (16) of the second cover element (5) face downwards.

20. The device (1) according to any preceding claim, comprising means (7) for connecting the device (1) to said second component (3) of the modular piece of furniture.

21. The device (1) according to the preceding claim, wherein said means (7) for connecting the device (1) to the second component (3) of the modular piece of furniture comprise one or more connecting seats (22) that are suitable to accommodate corresponding connecting portions (23) of said second component (3) of the modular piece of furniture.

22. The device (1) according to the preceding claim, wherein said connecting seats (22) are formed by said second cover element (5) of the device (1).

23. The device (1) according to any preceding claim, wherein, in said relative coupling position, said first (4) and said second cover elements (5) form a tubular body (24) which defines a through opening (25) that is suitable to at least partially accommodate said first component (2) of the modular piece of furniture, said through opening (25) being developed in an opening development direction (Q).

24. The device (1) according to the preceding claim, wherein said opening development direction (Q) of the through opening (25) is substantially parallel to said fitting direction (I).

25. The device (1) according to claim 23 or 24, wherein said tubular body (24) and said through opening (25), in the cross-section thereof, have a circular, or squared, or rectangular shape.

26. The device (1) for interconnecting a first component (2) and a second component (3) of a modular piece of furniture, said device (1) comprising:
- a first (4) and a second (5) cover elements which are suitable to at least partially cover said first component (2) of the modular piece of furniture;
- means (6) for connecting the first cover element (4) to said first component (2);
- means (8) for the relative connection of said first (4) and said second (5) cover elements of the device (1),
wherein said second cover element (5) is connected to said first component (2) only by means of said first cover element (4).

27. A modular shelf comprising:
- one or more uprights (2);
- one or more transversal components (3) to be connected to said uprights (2);
- one or more interconnecting devices (1) according to any preceding claims to interconnect said uprights (2) and said transversal components (3).

28. The modular shelf according to the preceding claim, wherein said uprights (2) comprise tubular bodies comprising one or more peripheral through holes (21) for connecting said uprights (2) to said interconnecting devices (1).

29. The modular shelf according to the preceding claim, wherein said through holes (21) are spaced in a development direction (M) along which said upright (2) is developed.
